# EUROPEAN PATENT APPLICATION

(11) **EP 3 812 817 A1**
(43) Date of publication of application: **28.04.2021**
(21) Application number: 20160263.8
(22) Date of filing: 28.02.2020
(51) Int. Cl.: G02B 6/44

(54) **OPTICAL FIBRE RIBBON CABLE WITH LOW DIAMETER OPTICAL FIBRES**

(30) Priority: 21.10.2019 IN 201911042649
(71) Applicant: Sterlite Technologies Limited, Haryana 122002 (IN)
(72) Inventor: Kumar, Sravan, 122002 Gurgaon (IN); Kondapalli, Hemanth, 122002 Gurgaon (IN); Shukla, Vikash, 122002 Gurgaon (IN); Mishra, Atulkumar, 122002 Gurgaon (IN); Sahoo, Kishore Chandra, 122002 Gurgaon (IN)
(74) Representative: Hepworth Browne

(57) **Abstract**

The method provided by the present disclosure is for manufacturing an optical fibre ribbon (100). The method of the present disclosure includes applying a matrix material (104) along a longitudinal length of a plurality of optical fibres (102). In addition, the plurality of optical fibres (102) is arranged in linear manner. Further, the matrix material (104) has uniform thickness. The matrix material (104) is applied throughout circumference of the plurality of optical fibres (102). The plurality of optical fibres (102) along with the matrix material (104) forms the optical fibre ribbon (100). Further, the plurality of optical fibres (102) is characterized by a diameter. The diameter of the plurality of optical fibres (102) is in range of about 150 micrometers to 180 micrometers. Each optical fibre of the plurality of optical fibres (102) is colored optical fibre.

## Description

### Field of the Invention

The present disclosure relates to the field of optical fibre cable and, in particular, relates to an optical fibre ribbon cable.

### Background of the invention

With the advancement of science and technology, various modern technologies are being employed for communication purposes. One of the most important modern communication technologies is the optical fibre communication technology using a variety of optical fibre cables. One such type of optical fibre cable is an optical fibre ribbon cable. Generally, the optical fibre ribbon cable is made of optical fibre ribbons placed inside a cable. Further, each optical fibre ribbon comprises multiple optical fibres placed in a linear manner. Conventionally, the optical fibre ribbons comprise of optical fibres having larger diameter in a range of about 200 micron to 250 micron. Moreover, the size of the optical fibre cable increases with an increase in the diameter of the optical fibres.

In light of the foregoing discussion, there exists a need for an optical fibre ribbon which overcomes the above cited drawbacks of conventionally known optical fibre ribbons.

### SUMMARY OF THE INVENTION

The present disclosure provides a method for manufacturing an optical fibre ribbon. The method includes applying a matrix material along a longitudinal length of a plurality of optical fibres. In addition, the plurality of optical fibres along with the matrix material forms the optical fibre ribbon. Further, the plurality of optical fibre is characterized by a diameter. Furthermore, the diameter of the plurality of optical fibres is in range of about 150 micrometers to 179 micrometers.

A primary object of the present disclosure is to provide an optical fibre ribbon cable with reduced diameter.

Another object of the present disclosure is to provide the optical fibre ribbon with high speed data transmission.

Yet another object of the present disclosure is to provide the optical fibre ribbon that can be arranged in buffer tube having low inner diameter.

Yet another object of the present disclosure is to provide the optical fibre ribbon that inserts more number of optical fibres in low diameter cable.

In an embodiment of the present disclosure, the each optical fibre of the plurality of the optical fibres is colored optical fibre.

In an embodiment of the present disclosure, the plurality of optical fibre is arranged in linear manner.

In an embodiment of the present disclosure, the plurality of optical fibres is aligned at a pitch in range of about 150 micrometers to 250 micrometers.

In an embodiment of the present disclosure, the optical fibre ribbon is one of a corrugated bendable optical fibre ribbon and an intermittently bonded optical fibre ribbon.

In an embodiment of the present disclosure, the matrix material may or may not occupy shape of the optical fibre ribbon. The shape of the matrix material is one of a grooved shape or a flat shape.

In an embodiment of the present disclosure, the color coating layer of colored optical fiber 102 has a thickness in range of about 5 micrometers to 20 micrometers.

In an embodiment of the present disclosure, the matrix material has uniform thickness.

In an embodiment of the present disclosure, the matrix material is applied throughout circumference of the plurality of optical fibres.

In an embodiment of the present disclosure, the matrix material of an optical fibre ribbon has a thickness in range of about 20 micrometers to 60 micrometers on each side of the optical fibre

In an embodiment of the present disclosure, the matrix material reduces stress developed on the optical fibre ribbon.

In an embodiment of the present disclosure, the optical fibre ribbon with 12 optical fibres has a width in range of about 2200 micrometers to 2300 micrometers and a pitch of 190 micrometers.

In an embodiment of the present disclosure, the optical fibre ribbon with 12 optical fibres has the width in range of about 2000 micrometers to 2100 micrometers and the pitch of 170 micrometers.

In an embodiment of the present disclosure, the optical fibre ribbon with 12 optical fibres has the width in range of about 1800 micrometers to 1900 micrometers and the pitch of 150 micrometers.

In an embodiment of the present disclosure, the optical fibre ribbon has a height in range of about 190 micrometers to 300 micrometers.

### BRIEF DESCRIPTION OF DRAWING

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:

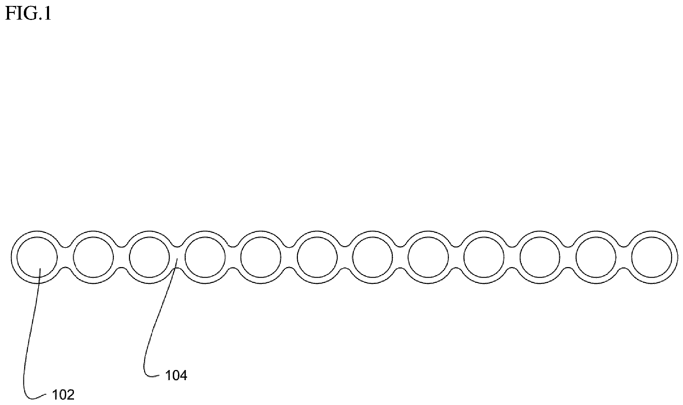

FIG. 1 illustrates a cross sectional view of an optical fibre ribbon with low diameter optical fibres, in accordance with an embodiment of the present disclosure.

It should be noted that the accompanying figures are intended to present illustrations of few exemplary embodiments of the present disclosure. These figures are not intended to limit the scope of the present disclosure. It should also be noted that accompanying figures are not necessarily drawn to scale.

### REFERENCE NUMERALS IN THE DRAWINGS

For a more complete understanding of the present invention parts, reference is now made to the following descriptions:
100. Optical fibre ribbon.
102. Plurality of optical fibres.
104. Matrix material.

### DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention.

Reference in this specification to "one embodiment" or "an embodiment" means that a particular feature, structure, or characteristic described in connection with the embodiment is included in at least one embodiment of the present technology. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

Reference will now be made in detail to selected embodiments of the present disclosure in conjunction with accompanying figures. The embodiments described herein are not intended to limit the scope of the disclosure, and the present disclosure should not be construed as limited to the embodiments described. This disclosure may be embodied in different forms without departing from the scope and spirit of the disclosure. It should be understood that the accompanying figures are intended and provided to illustrate embodiments of the disclosure described below and are not necessarily drawn to scale. In the drawings, like numbers refer to like elements throughout, and thicknesses and dimensions of some components may be exaggerated for providing better clarity and ease of understanding.

Moreover, although the following description contains many specifics for the purposes of illustration, anyone skilled in the art will appreciate that many variations and/or alterations to said details are within the scope of the present technology. Similarly, although many of the features of the present technology are described in terms of each other, or in conjunction with each other, one skilled in the art will appreciate that many of these features can be provided independently of other features. Accordingly, this description of the present technology is set forth without any loss of generality to, and without imposing limitations upon, the present technology.

It should be noted that the terms "first", "second", and the like, herein do not denote any order, ranking, quantity, or importance, but rather are used to distinguish one element from another. Further, the terms "a" and "an" herein do not denote a limitation of quantity, but rather denote the presence of at least one of the referenced item.

Referring to FIG. 1, this is a cross sectional view of an optical fibre ribbon 100 with low diameter optical fibres, in accordance with an embodiment of the present disclosure. The optical fibre ribbon 100 includes a plurality of optical fibres 102. In general, optical fibre ribbon includes number of optical fibres secured or embedded substantially parallel to one another within coating material. In addition, optical fibre ribbons are embedded inside optical fibre cables that require high fibre counts within less installation space. In general, optical fibre cables are used to transfer digital data signals in form of light up to distances of hundreds of miles with higher throughput rates than those achievable via electrical communication cables. In general, optical fibre refers to medium associated with transmission of information over long distances in form of light pulses. In addition, the optical fibre uses light to transmit voice and data communications over long distances.

The plurality of optical fibres 102 is arranged in linear manner in the optical fibre ribbon 100. The plurality of optical fibres 102 is enclosed within a matrix material 104. In an embodiment of the present disclosure, the matrix material 104 is applied along a longitudinal length of the plurality of optical fibres 102. In addition, the matrix material 104 has uniform thickness. Further, the matrix material 104 is applied throughout circumference of the plurality of optical fibres 102. Furthermore, the plurality of optical fibres 102 along with the matrix material 104 forms the optical fibre ribbon 100. In an embodiment of the present disclosure, the matrix material 104 may or may not occupy shape of the optical fibre ribbon 100. In addition, the matrix material 104 has one of a grooved shape or a flat structure. In general, coating material provides various handling characteristics to optical ribbon. In addition, various handling characteristics include encapsulation, easy peel, breakout, robustness and the like. In an embodiment of the present discourse, the optical fibre ribbon 100 has 12 optical fibres. In another embodiment of the present disclosure, the optical fibre ribbon 100 may have any number of optical fibres.

In an embodiment of the present disclosure, each optical fibre of the plurality of optical fibres 102 is single mode optical fibre. In an embodiment of the present disclosure, each optical fibre of the plurality of optical fibres 102 is ITU-T G.652 D fibre. In another embodiment of the present disclosure, each optical fibre of the plurality of optical fibres 102 is ITU-T G.657 A2 fibre. In yet another embodiment of the present disclosure, each optical fibre of the plurality of optical fibres 102 may be any other type of optical fibre.

In addition, the plurality of optical fibres 102 complies with specific telecommunication standards. Further, the plurality of optical fibres 102 complies with specific telecommunication standards. The telecommunication standards are defined by International Telecommunication Union - Telecommunication (hereinafter "ITU-T"). In an embodiment of the present disclosure, the plurality of optical fibres 102 is compliant with G.657 recommendation standard set by ITU-T. In another embodiment of the present disclosure, the plurality of optical fibres 102 is compliant with G.652 recommendation standard set by ITU-T. Furthermore, ITU-T G.657 recommendation describes geometrical, mechanical and transmission characteristics of single mode optical fibre. The ITU-T G.657 standard defines a plurality of optical characteristics associated with the plurality of optical fibres 102. Moreover, the ITU-T G.652 standard describes the geometrical, mechanical and transmission attributes of single mode optical fibre. In another embodiment of the present disclosure, each optical fibre of the plurality of optical fibres 102 is multi-mode optical fibre.

In an embodiment of the present disclosure, each optical fibre of the plurality of optical fibres 102 is colored optical fibres. In an embodiment of the present disclosure, the plurality of optical fibres 102 has a diameter in range of about 150 micrometers to 179 micrometers. The diameter of the plurality of optical fibres 102 has a tolerance of ±1 micrometer. In another embodiment of the present disclosure, range of the diameter of the plurality of optical fibres 102 may vary. In an embodiment of the present disclosure, the plurality of optical fibres 102 is aligned at a pitch in range of about 150 micrometers to 250 micrometers. In general, pitch is distance between geometrical centers of any two optical fibres lying adjacent to each other.

In an embodiment of the present disclosure, the color coating layer of a colored optical fibre 102 has a thickness in range of about 5 micrometers to 20 micrometers. In another embodiment of the present disclosure, the color coating layer of an optical fibre 102 may vary.

In an embodiment of the present disclosure, the matrix material 104 has a thickness in range of about 20 micrometers to 60 micrometers on each side of the optical fibre 102 in the optical fibre ribbon 100. In another embodiment of the present disclosure, the thickness of the matrix material 104 may vary.

In an embodiment of the present disclosure, the optical fibre ribbon 100 has a height in range of about 190 micrometers to 300 micrometers. In another embodiment of the present disclosure, range of the height of the optical fibre ribbon 100 may vary.

The optical fibre ribbon 100 has lower dimensions. In an embodiment of the present disclosure, the optical fibre ribbon 100 is bendable ribbon. In another embodiment of the present disclosure, the optical fibre ribbon 100 is flat ribbon. In yet another embodiment of the present disclosure, the optical fibre ribbon 100 is corrugated ribbon. In an embodiment of the present disclosure, the optical fibre ribbon 100 with 12 optical fibres has a width in range of about 2200 micrometers to 2300 micrometers and the pitch of 190 micrometers. In another embodiment of the present disclosure, the optical fibre ribbon 100 with 12 optical fibres has the width in range of about 2000 micrometers to 2100 micrometers and the pitch of 170 micrometers. In yet another embodiment of the present disclosure, the optical fibre ribbon 100 with 12 optical fibres has the width in range of about 1800 micrometers to 1900 micrometers and the pitch of 150 micrometers. In yet another embodiment of the present disclosure, the width of the optical fibre ribbon 100 may vary. In an embodiment of the present disclosure, the optical fibre ribbon 100 has a height in range of about 190 micrometers to 300 micrometers. In another embodiment of the present disclosure, the height of the optical fibre ribbon 100 may vary.

In an embodiment of the present disclosure, the optical fibre ribbon 100 is bendable optical fibre ribbon. In addition, the optical fibre ribbon 100 is flexible ribbon. In an embodiment of the present disclosure, the matrix material 104 on the optical fibre ribbon 100 facilitates in reduction of stress developed on the optical fibre ribbon 100. In an example, the optical fibre ribbon 100 reduces stress when installed in compact structure cables. In general, bendable optical fibre ribbon has capability of transmitting signals with less attenuation. In general, attenuation is the reduction of amplitude of signal, electric current, or any other oscillation. The low micro bending losses and other losses due to bend insensitivity of the optical fibre ribbon 100 enables lower attenuation at output.

The optical fibre ribbon 100 may be installed in any type of optical fibre cable. In general, types of optical fibre cable include armored optical fibre cable, fire retardant optical fibre cable, multi-loose tube optical fibre cable, high density optical fibre cable and the like. In addition, types of optical fibre cable include optical fibre cable with central strength member and optical fibre cable without central strength member. In addition, the optical fibre cable may include any number of the optical fibre ribbons.

In an embodiment of the present disclosure, the optical fibre ribbon 100 enables mass splicing of the plurality of optical fibres 102. In an example, the plurality of optical fibres 102 is embedded inside a buffer tube of reduced inner diameter. In addition, the plurality of optical fibres 102 can be inserted in any optical fibre cable of same diameter.

Further, it may be noted that in FIG. 1, the optical fibre ribbon 100 includes 12 number of optical fibres; however, those skilled in the art would appreciate that more or less number of optical fibres may be included in the optical fibre ribbon 100.

The optical fibre ribbon has numerous advantages over the prior art. The optical fibre ribbon has an improved optical performance in optical fibre ribbon cables. In addition, the optical fibre ribbon facilitates in reduction of overall diameter of the optical fibre ribbon cable in which the optical fibre ribbon is installed. Further, the optical fibre ribbon provides high speed data transmission through the optical fibre ribbon cable. Furthermore, the optical fibre ribbon provides minimal attenuation.

Although, the present disclosure has been explained in relation to its preferred embodiment(s) as mentioned above, it is to be understood that many other possible modifications and variations can be made without departing from the spirit and scope of the inventive aspects of the present invention. It is, therefore, contemplated that the appended claim or claims will cover such modifications and variations that fall within the true scope of the invention.

## Claims

1. A method for manufacturing an optical fibre ribbon (100), the method comprising:
applying a matrix material (104) along a longitudinal length of a plurality of optical fibres (102), wherein the plurality of optical fibres (102) along with the matrix material (104) forms the optical fibre ribbon (100),
wherein optical fibre ribbon (100) is one of a corrugated bendable optical fibre ribbon, wherein the diameter of the plurality of optical fibres (102) is in range of 150 micrometers to 179 micrometers.

2. The method as recited in claim 1, wherein the diameter of the plurality of optical fibres (102) has a tolerance of ±1 micrometer.

3. The method as recited in claim 1 or 2, wherein each optical fibre of the plurality of optical fibres (102) is colored optical fibre.

4. The method as recited in any preceding claim, wherein the matrix material (104) of an optical fibre ribbon (100) has a thickness in range of 20 micrometers to 60 micrometers on each side of the optical fibre (102).

5. The method as recited in any preceding claim, wherein the optical fibre ribbon (100) has a height in range of 190 micrometers to 300 micrometers.

6. The method as recited in any preceding claim, wherein the plurality of optical fibres (102) is aligned at a pitch in range of 150 micrometers to 250 micrometers.

7. The method as recited in any preceding claim, wherein optical fibre ribbon (100) is one of a corrugated bendable optical fibre ribbon and an intermittently bonded optical fibre ribbon.

8. The method as recited in any preceding claim, wherein the matrix material (104) may or may not occupy shape of the optical fibre ribbon (100), wherein shape of the matrix material (104) is one of a grooved shape or a flat shape.

9. The method as recited in any preceding claim, wherein the optical fibre ribbon (100) of 12 optical fibres with a diameter of 150 micrometers and a pitch of 190 micrometers has, a width in range of 2200 micrometers to 2300 micrometers.

10. The method as recited in any preceding claim, wherein the optical fibre ribbon (100) of 12 optical fibres with a diameter of 150 micrometers and a pitch of 170 micrometers has, a width in range of 2000 micrometers to 2100 micrometers.

11. The method as recited in any preceding claim, wherein the optical fibre ribbon (100) of 12 optical fibres with a diameter of 150 micrometers and a pitch of 150 micrometers has, a width in range of 1800 micrometers to 1900 micrometers.

12. A method for manufacturing an optical fibre ribbon (100), the method comprising:
applying a matrix material (104) along a longitudinal length of a plurality of optical fibres (102), wherein the plurality of optical fibres (102) along with the matrix material (104) forms the optical fibre ribbon (100),
wherein optical fibre ribbon (100) is one of a corrugated bendable optical fibre ribbon, wherein the height of the plurality of the optical fibre ribbon (100) is in the range of 190 micrometer to 300 micrometer.

13. The method as recited in claim 12, wherein the diameter of the plurality of optical fibres (102) is in range of about 150 micrometers to 179 micrometers, wherein the diameter of the plurality of optical fibres (102) has a tolerance of ±1 micrometer.

14. The method as recited in claim 12 or 13, wherein optical fibres (102) is a bare glass fibre which includes primary and secondary coating, wherein the diameter of the optical fibre of the plurality of optical fibres (102) is in the range of 150 micrometers to 179 micrometers, wherein the diameter of the plurality of optical fibres (102) has a tolerance of ±1 micrometer.

15. The method as recited in any of claims 12 to 14, wherein each optical fibre of the plurality of optical fibres (102) is colored optical fibre.

16. The method as recited in any of claims 12 to 15, wherein the matrix material (104) of an optical fibre ribbon (100) has a thickness in range of 20 micrometers to 60 micrometers on each side of the optical fibre (102).

17. The method as recited in any of claims 12 to 16, wherein the plurality of optical fibres (102) is aligned at a pitch in range of 150 micrometers to 250 micrometers.

18. The method as recited in any of claims 12 to 17, wherein optical fibre ribbon (100) is an intermittently bonded optical fibre ribbon.

19. The method as recited in any of claims 12 to 18, wherein the matrix material (104) may or may not occupy shape of the optical fibre ribbon (100), wherein shape of the matrix material (104) is one of a grooved shape or a flat shape.

20. The method as recited in any of claims 12 to 19, wherein the optical fibre ribbon (100) of 12 optical fibres with a diameter of 150 micrometers and a pitch of 190 micrometers, has a width in range of 2200 micrometers to 2300 micrometers.

21. The method as recited in claim 11, wherein the optical fibre ribbon (100) of 12 optical fibres with a diameter of 150 micrometers and a pitch of 170 micrometers, has a width in range of 2000 micrometers to 2100 micrometers.

22. The method as recited in claim 11, wherein the optical fibre ribbon (100) of 12 optical fibres with a diameter of 150 micrometers and a pitch of 150 micrometers, has a width in range of 1800 micrometers to 1900 micrometers.
